# FASCICULE DE BREVET EUROPEEN

(11) **EP 1 053 636 B1**
(45) Date de publication et mention de la délivrance du brevet: **22.05.2002**
(21) Numéro de dépôt: 99900522.6
(22) Date de dépôt: 12.01.1999
(51) Int. Cl.: H04N 5/335, H04N 5/225

(54) **PROCEDE D'ACQUISITION ULTRA-RAPIDE D'UNE SEQUENCE D'IMAGES AU MOYEN D'UN CAPTEUR MATRICIEL A SEMI-CONDUCTEURS, TYPE CCD, ET DISPOSITIF POUR LA MISE EN OEUVRE DE CE PROCEDE**
ULTRAHOCHGESCHWINDIGKEITSERFASSUNGSVERFAHREN EINER BILDSEQUENZ MIT EINEM HALBLEITERMATRIXSENSOR DES TYPS CCD UND VORRICHTUNG ZUR DURCHFÜHRUNG DIESES VERFAHRENS
METHOD FOR THE ULTRA-FAST ACQUISITION OF AN IMAGE SEQUENCE USING A CCD-TYPE MATRIX SENSOR WITH SEMICONDUCTORS, AND DEVICE FOR CARRYING OUT SAID METHOD

(30) Priorité: 13.01.1998 FR 9800518
(43) Date de publication de la demande: 22.11.2000
(73) Titulaire: UNIVERSITE DES SCIENCES ET TECHNOLOGIES DE LILLE, 59655 Villeneuve-d'Ascq Cedex (FR); Ecole Centrale de Lille, 59651 Villeneuve d'Ascq Cedex (FR)
(72) Inventeur: PERNOD, Philippe, F-59800 Lille (FR); MERLEN, Alain, F-59800 Lille (FR); BEGUE, Christian, F-59650 Villeneuve d'Ascq (FR); AHYL, Ayayé, Auburn, AL 36830 (US)
(74) Mandataire: Hennion, Jean-Claude
(86) Numéro de dépôt international: FR9900041
(87) Numéro de publication internationale: WO9937089

(56) Documents cités:
- EP-A- 0 182 334
- EP-A- 0 248 687
- EP-A- 0 364 345

## Description

La présente invention concerne un procédé d'acquisition ultra-rapide d'une séquence d'un nombre prédéterminé d'images, mettant en oeuvre un capteur d'images matriciel à semi-conducteurs, et plus particulièrement un capteur à transfert de charges type CCD. Elle a également pour objet un dispositif d'acquisition d'images ultra-rapide pour la mise en oeuvre de ce procédé. Dans le présent texte, la notion "ultra-rapide" concerne l'acquisition d'images avec une cadence de prise d'image supérieure ou égale à 10.000 images/seconde. L'invention trouve avantageusement son application à la visualisation de tout phénomène ultra-rapide, transitoire ou périodique, tel que par exemple la visualisation d'écoulements en mécanique des fluides, de phénomènes balistiques, de propagation d'ondes acoustiques, etc...

Les principaux dispositifs d'acquisition d'images ultra-rapides connus à ce jour peuvent être classés en deux catégories : les dispositifs utilisant des films photographiques et les dispositifs utilisant un ou plusieurs capteurs à semi-conducteurs, et en particulier des capteurs à transfert de charges communément appelés CCD.

Les dispositifs de la première catégorie ont été les premiers en date à être utilisés. Parmi ces dispositifs on peut citer les caméras à films tournants qui utilisent des films photographiques disposés sur des tambours tournants et qui mettent éventuellement en oeuvre des miroirs ou prismes tournant en sens opposé. On connaît également les caméras à films fonctionnant selon le principe optique Cranz-Schardin, et permettant de fournir sur un film photographique d'enregistrement une pluralité d'images successives juxtaposées. Ces dispositifs de la première catégorie permettent aujourd'hui d'atteindre des cadences de prises d'images de l'ordre de 1 million à 10 millions d'images par seconde. En revanche, ils présentent l'inconvénient de nécessiter le développement photographique des films pour permettre l'exploitation des résultats, ce qui implique notamment qu'aucun contrôle de prise de vue n'est possible tant que le film n'est pas développé. Leurs coûts d'achat et de fonctionnement sont en outre très élevés. Enfin, s'agissant plus particulièrement de la caméra Cranz-Schardin à film, celle-ci ne peut fonctionner qu'en lumière transmise, et ne peut pas fonctionner en lumière réfléchie. Ce système génère en plus une forte parallaxe à cause de l'encombrement important des sources lumineuses , et exige des temps d'exposition suffisamment importants pour impressionner une pellicule photosensible.

Les dispositifs de la seconde catégorie sont apparus plus récemment, et ont tendance à supplanter ceux de la première catégorie car ils permettent d'en pallier les principaux inconvénients, et en outre de réaliser facilement un traitement informatique des images acquises et numérisées. Aujourd'hui les capteurs d'images à semi-conducteurs les plus utilisés sont les capteurs matriciels à transfert de charges type CCD, qui comportent essentiellement une zone matricielle photosensible équipée de photodiodes permettant de transformer et d'accumuler sous forme de charges électriques la lumière qui vient impressionner la zone photosensible. D'autre part ils sont associés à des moyens électroniques de gestion aptes à transférer et dans la plupart des cas à numériser les charges électriques accumulées par les photodiodes. Les capteurs d'images à semi-conducteurs ne se limitent toutefois pas aux capteurs à transfert de charges type CCD à base de photodiodes, mais s'étendent à tout capteur utilisant des semi-conducteurs aptes à convertir et accumuler la lumière sous forme de charges électriques, tels que notamment les cellules photo-électriques, phototransistors, etc...

Le principal inconvénient des capteurs d'images à semi-conducteurs mis en oeuvre dans les dispositifs de la seconde catégorie, et en particulier des capteurs matriciels CCD, est qu'ils autorisent une cadence de prise d'images relativement faible. En pratique, ces capteurs sont limités à ce jour à des cadences maximales de prises d'images de l'ordre de 10 000 images par seconde. Cette limitation de la cadence de prise d'images découle principalement des temps de transfert des charges électriques pour vider la zone photosensible du capteur entre chaque image et des temps de numérisation et mémorisation des charges électriques transférées. Une autre limitation vient de la difficulté de réaliser des temps d'exposition très courts sur plusieurs images successives.

Dans le but de réaliser un dispositif appartenant à la seconde catégorie, qui puisse travailler aussi bien en lumière transmise que réfléchie, et sans usure mécanique, et qui présente des performances de cadence de prise d'images élevées, il a été proposé dans la demande de brevet européen EP O 589 002 une caméra électronique ultra-rapide mettant en oeuvre une pluralité de capteurs d'images à semi-conducteurs comportant chacun leur propre mémoire vidéo pour le transfert et le stockage sous forme numérique des images optiques acquises. Les capteurs sont disposés en cercle autour d'une pyramide à facettes permettant de distribuer les images vers chacun des capteurs d'images, chaque facette de la pyramide étant associée optiquement à un capteur d'image.

Dans cette solution, les capteurs d'images sont indépendants électroniquement et peuvent donc avantageusement fonctionner en parallèle, ce qui permet de s'affranchir des temps de traitement électronique, et notamment des temps de transfert et de numérisation des charges électriques entre chaque image optique. Cette solution présente toutefois de nombreux inconvénients. L'inconvénient principal qui constitue un obstacle majeur à la fiabilité de ce type de caméra, est lié à la forme triangulaire des facettes du miroir pyramidal, qui entraîne des différences d'éclairement trop importantes sur une même image. D'autres inconvénients découlent de l'utilisation d'une pluralité de capteurs d'images. Notamment le prix de revient et l'encombrement du dispositif sont très largement augmentés. Les réglages optiques sont en outre longs et complexes. L'utilisation de plusieurs capteurs entraîne un risque d'erreur d'apparité et de possible différences de température entre les capteurs. Le dispositif est relativement figé, et on ne peut modifier, et notamment augmenter le nombre d'images, sans modifier la structure du dispositif dans son intégralité.

La présente invention a pour but principal de proposer un procédé et un dispositif d'acquisition d'une séquence d'un nombre donné (N) d'images qui entrent dans la seconde catégorie sus-mentionnée, mais qui pallient les inconvénients inhérents à l'utilisation de capteur d'images à semi-conducteur, et permettent d'obtenir des cadences de prise d'images élevées supérieures ou égales à 10.000 images/seconde. L'invention a également pour but de proposer un procédé et un dispositif d'acquisition d'images qui, de manière comparable à la caméra électronique de la demande de brevet européen EP 0 589 002, peuvent être mis en oeuvre, sans usure mécanique, aussi bien en lumière transmise qu'en lumière réfléchie, mais qui pallient en outre les inconvénients sus-mentionnés inhérents à la caméra électronique décrite dans cette demande de brevet européen.

Le procédé de l'invention utilise un capteur d'images qui comporte une zone matricielle photosensible à semi-conducteurs ayant pour fonction de convertir et d'accumuler l'énergie lumineuse sous forme de charges électriques, et des moyens électroniques de gestion conçus pour transférer les charges électriques accumulées par la zone photosensible.

De manière caractéristique selon l'invention :
- on génère une séquence de (N) images optiques, qui sont espacées temporellement par des intervalles de temps (δtᵢ) inférieurs ou égaux à 0,1 ms, et qui sont réparties spatialement de telle sorte que chaque image optique vienne impressionner la zone photosensible du capteur dans un secteur qui lui est affecté.
- on transfère tout ou partie des charges électriques accumulées par la zone photosensible du capteur au moins lorsqu'une séquence d'images optiques a été générée.

Le procédé de l'invention permet avantageusement de multiplier les performances de cadence de prise d'images comparativement à l'utilisation d'un capteur à semi-conducteurs dont la zone photosensible n'est pas prévue pour être impressionnée par secteurs, et qui impose par conséquent des temps d'attente minimum importants entre chaque image, notamment pour vider la zone photosensible du capteur entre chaque image. Le choix de la partition de la zone photosensible en (N) secteurs est en outre totalement arbitraire et indépendante de la gestion électronique du capteur. Cette partition de la zone photosensible peut être quelconque et est fixée uniquement par le choix de la répartition spatiale des images optiques.

Dans la demande de brevet français FR 2 598 273, il a certes déjà été proposé antérieurement à l'invention de diviser la zone photosensible d'un capteur matriciel à transfert de charges type CCD. Cependant dans cette publication, le but visé n'est pas d'accélérer la cadence de prise d'images du capteur pour acquérir une pluralité d'images espacées temporellement, mais la solution préconisée vise à permettre l'acquisition à l'aide d'un unique capteur d'au moins deux images émises simultanément. En outre, dans la demande de brevet français FR 2 598 273, des moyens de commande sont prévus pour répartir chaque image acquise simultanément par la zone photosensible dans des moyens de mémorisation extérieurs. Le fonctionnement de ces moyens de commande induit une partition de la zone photosensible qui est horizontale et figée.

Il a par ailleurs été proposé dans la demande de brevet européen EP-A-0.182.334 une caméra vidéo haute vitesse qui met en oeuvre :
- un premier obturateur mécanique, tel que par exemple un disque rotatif, conçu pour transmettre de manière intermittente un faisceau lumineux principal de l'objet filmé, produit par une lentille principale,
- un moyen de division du faisceau lumineux transmis par le premier obturateur mécanique, lequel moyen de division est par exemple constitué par une matrice de lentilles, et permet de produire une pluralité de faisceaux lumineux sensiblement identiques et répartis spatialement,
- un second obturateur mécanique permettant de transmettre la pluralité de faisceaux lumineux issus du moyen de division précité, de manière séquentielle et en synchronisme avec le premier obturateur mécanique,
- et un moyen d'analyse d'image sensible à la pluralité de faisceaux lumineux traversant le second obturateur mécanique.

Dans une variante particulière de réalisation, le moyen d'analyse d'image comprend un capteur CCD. Cependant, il convient de souligner que cette demande de brevet européen EP-A-0.182.334 ne concerne pas l'acquisition ultra-rapide, au sens de l'invention, d'une séquence d'un nombre donné (N) d'images, mais concerne le domaine des caméras vidéo qui permette de filmer en continu un objet et dans lesquelles le moyen d'analyse d'image assure un balayage de l'image acquise à une vitesse prédéterminé. Plus particulièrement ces caméras mettent en oeuvre un système d'analyse d'image normalisé NTS, dans lequel la vitesse de balayage de l'image acquise est de 1/60s. Il en résulte principalement que dans le dispositif d'acquisition d'images décrit dans cette publication, il est primordial que le premier obturateur mécanique ait une vitesse d'obturation synchrone avec le signal de balayage d'image du système d'analyse d'image. Dans le cas d'un système normalisé NTS, la vitesse d'obturation du premier obturateur mécanique est ainsi fixée à 1/60s. Dans un tel système, l'augmentation de la cadence de prise d'images impose d'augmenter le nombre de lumières dans le premier obturateur mécanique et le nombre de lentilles dans la matrice de lentilles constituant le moyen de division du faisceau transmis de matière intermittente par le premier obturateur mécanique. Il en résulte principalement que les cadences de prise d'images avec un tel système sont nécessairement très faibles comparativement à l'invention, et nettement inférieures à 10.000 images/s. Dans le meilleur des cas décrit dans cette demande de brevet européen EP-A-0.182.334, cette cadence de prise d'images est au mieux de 480images/s. Eventuellement pour augmenter la cadence de prise d'images avec une caméra telle que celle décrite dans la demande de brevet européen EP-A-0.182.334, il serait également envisageable d'augmenter la vitesse de rotation des disques formant respectivement les premier et second obturateurs mécaniques. Cependant dans une telle éventualité, il est pratiquement impossible d'atteindre une cadence de prise d'images de l'ordre de 10.000 images/s et à fortiori de dépasser cette cadence.

Dans une variante préférée de réalisation de la présente invention, le transfert des charges électriques accumulées par la zone photosensible du capteur est déclenché une fois seulement que la séquence d'images optiques a été générée. Ceci n'est toutefois pas limitatif de l'invention. En pratique, compte-tenu des faibles intervalles de temps (δtᵢ) séparant deux-images optiques successives, il est également envisageable de déclencher le transfert des charges électriques accumulées dans la zone photosensible simultanément au déclenchement de la séquence d'image optique, voire même quelques secondes avant le déclenchement de la séquence d'images optiques. Dans ce dernier cas , le déclenchement anticipé du transfert se traduit simplement par une perte minimum d'informations dans les images acquises.

Plus particulièrement, les intervalles de temps (δtᵢ) séparant les images otiques successives seront avantageusement réglables , et de préférence indépendamment les uns des autres.

L'invention a pour autre objet un dispositif d'acquisition d'images ultra-rapide pour la mise en oeuvre du procédé précité, qui comprend :
- un capteur d'images comportant une zone matricielle photosensible à semi-conducteurs ayant pour fonction de convertir et d'accumuler l'énergie lumineuse sous forme de charges électriques, et des moyens électroniques de gestion conçus pour transférer les charges électriques accumulées par la zone photosensible.
- des moyens optiques et électroniques conçus pour générer sur commande une séquence de (N) images optiques, qui sont espacées temporellement par des intervalles de temps (δtᵢ) inférieurs ou égaux à 0,1 ms, et qui sont réparties spatialement de telle sorte que chaque image optique vienne impressionner un secteur de la zone photosensible du capteur, qui lui est affectée.
- et une unité de traitement qui est connectée aux moyens électriques de gestion associés au capteur et qui est conçue pour commander, via les moyens électroniques de gestion du capteur, le transfert de toute ou partie des charges électriques accumulées par la zone photosensible.

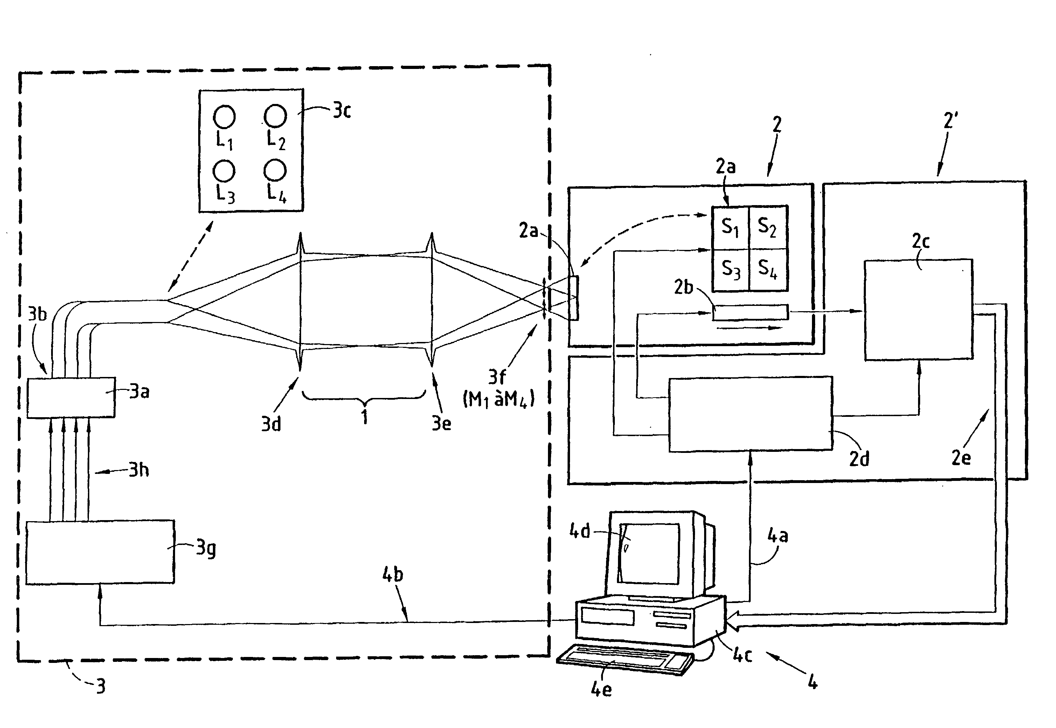

D'autres caractéristiques et avantages de l'invention apparaîtront plus clairement à la lecture de la description qui va à présent être faite d'un exemple particulier de réalisation , laquelle description est donnée à titre d'exemple non limitatif et en référence à l'unique figure 1 annexée qui représente un synoptique général d'un dispositif d'acquisition d'images ultra-rapide conforme à l'invention, mettant en oeuvre un capteur matriciel à transfert de charges, type CCD, et fonctionnant en lumière transmise.

Le dispositif illustré à la figure 1 permet d'acquérir une succession d'images ultra-rapide d'un phénomène prévu pour se produire dans la zone de visualisation 1 ou d'un objet placé dans ladite zone 1. Le dispositif comprend :
- un capteur 2 à transfert de charges, type CCD, qui est associé à des moyens électroniques de gestion 2',
- des moyens optoélectroniques 3 détaillés ci-après,
- et une unité de traitement 4 permettant de commander les moyens électroniques de gestion 2' associés au capteur 2, de récupérer les images numérisées délivrées par les moyens électroniques de gestion 2', et permettant en outre de préférence le traitement informatique de ces images numériques.

L'architecture interne du capteur 2 et des moyens électroniques de gestion 2' associés est usuelle et comprend essentiellement, pour le capteur, une zone matricielle photosensible 2a, et un registre à décalage 2b, et pour les moyens électroniques de gestion, un convertisseur analogique/numérique 2c, et des moyens électroniques 2d de gestion de la zone photosensible 2a, du registre à décalage 2b et du convertisseur analogique/numérique 2c. De manière usuelle la zone matricielle photosensible 2a est équipée d'une pluralité de photodiodes (non représentées) qui permettent de convertir et d'accumuler l'énergie lumineuse venant éclairer la zone photosensible 2a sous la forme de charges électriques. Les moyens électroniques de gestion 2' associés au capteur 2 sont conçus pour commander le transfert ligne par ligne des charges électriques stockées par les photodiodes jusqu'au convertisseur analogique/numérique 2c, via le registre à décalage 2b. En sortie le convertisseur analogique/numérique 2c délivre sur un bus de communication 2e des données numériques codées sur un nombre de bits prédéterminé fonction du convertisseur analogique/numérique 2c utilisé. A chaque donnée numérique générée correspond la valeur d'un pixel de la zone matricielle photosensible 2a du capteur CCD.

Conformément à l'invention, la zone photo-sensible matricielle 2a du capteur 2 est prévue d'une manière générale pour être impressionnée en (N) secteurs Sₙ. Les moyens optoélectroniques 3, dont un exemple particulier de réalisation va à présent être décrit, sont conçus pour générer sur commande une séquence de (N) images optiques, c'est-à-dire en nombre égal au nombre de secteurs Sₙ de la zone photo-sensible 2a du capteur, lesquelles images sont espacées temporellement par des intervalles de temps (δtᵢ), de préférence réglables indépendamment les uns des autres, et sont réparties spatialement de telle sorte qu'une image optique vienne impressionner un secteur donné Sₙ de la zone photosensible 2a du capteur 2.

Dans l'exemple particulier illustré, les moyens optoélectroniques 3 comportent :
- une matrice 3a de (N) sources lumineuse couplées respectivement à (N) fibres optiques 3b qui sont agencées en sorte de constituer (N) sources lumineuses Lₙ réparties spatialement selon une matrice d'émission 3c,
- une première lentille 3d permettant de convertir les faisceaux lumineux divergents issus de chaque fibre optique 3b en faisceaux parallèles,
- une seconde lentille 3e refocalisant les faisceaux parallèles sur une matrice de réception 3f constituée de (N) micro-lentilles Mₙ, qui sont associées respectivement aux (N) secteurs Sₙ de la zone photosensible 2a du capteur 2, de telle sorte que l'image fournie par une micro-lentille Mₙ donnée vient exclusivement impressionner le secteur correspondant Sₙ de la zone photosensible 2a,
- un séquenceur 3g apte à commander l'allumage successivement des sources lumineuses de la matrice 3a par l'intermédiaire de signaux de commande 3h selon une séquence programmable, c'est-à-dire selon un ordre choisi pour l'allumage des sources lumineuses, et avec des intervalles de temps (δtᵢ) séparant l'allumage de deux sources lumineuses successives et des durées d'allumage (Δtᵢ) de chaque source lumineuse qui sont réglables. De préférence chaque intervalle de temps (δtᵢ) et/ou chaque durée d'allumage (Δtᵢ) est réglable indépendamment.

Les objets ou phénomènes à visualiser sont destinés à être placés dans la zone de visualisation 1 comprise entre les deux lentilles 3d et 3e, c'est-à-dire sur le trajet des faisceaux parallèles, et créent éventuellement par leur présence des modifications d'indices optique ou réfractrice déviant localement les trajets lumineux.

De préférence, le séquenceur 3g est programmable, par exemple par l'intermédiaire d'une liaison série type RS232, en sorte de pouvoir régler principalement les intervalles de temps (δtᵢ) et la durée d'allumage (Δtᵢ) de chaque source lumineuse, en les adaptant à une application donnée.

L'unité de traitement 4 du dispositif de la figure 1 est reliée d'une part aux moyens électroniques de gestion 2d du capteur 2 par un signal de commande 4a, lui permettant de déclencher le transfert et la numérisation de l'intégralité des charges électriques accumulées par la zone photo-sensible 2a, et d'autre part au séquenceur 3g par l'intermédiaire d'un second signal de commande 4b, lui permettant de déclencher la séquence d'allumage des sources lumineuses Lₙ, via le séquenceur 3g. Cette unité de traitement 4 est en outre connectée au bus de donnée 2e du capteur 2, et est apte à récupérer les données numériques délivrées par le convertisseur analogique/numérique 2c du capteur 2.

Avantageusement, l'unité de traitement 4 est de préférence constituée par l'unité centrale 4c d'un micro-ordinateur personnel du type PC, équipée de ses périphériques usuels, et notamment écran 4a, clavier 4e, carte d'acquisition..., et est conçue pour stocker en mémoire et afficher pour un opérateur, après chaque séquence d'acquisition, l'image numérisée de la zone photosensible 2a délivrée par le convertisseur 2c. Plus particulièrement, l'unité de traitement 4 peut avantageusement être conçue pour traiter chaque image numérisée délivrées par le convertisseur 2c, à l'aide de tout logiciel de traitement d'images connu à ce jour, en sorte notamment de permettre à un opérateur de diviser chaque image numérisée en (N) images correspondant aux (N) images acquises par chaque secteur Sₙ de la zone photosensible 2a, et de traiter individuellement chaque image en la stockant en mémoire, par exemple dans un fichier, et/ou en l'affichant séparément des autres images, en la filtrant pour en améliorer la qualité, en l'agrandissant, etc...

Un exemple particulier de mise en oeuvre du dispositif qui vient d'être décrit pour réaliser le procédé d'acquisition de l'invention va à présent être décrit. Dans cet exemple, le capteur CCD 2 utilisé est conçu pour vider en permanence la zone photosensible 2a, le vidage du capteur CCD étant interrompu sur commande de l'opérateur. Le phénomène à observer est créé dans la zone de visualisation 1 sous le contrôle d'un opérateur. Cet opérateur commande manuellement, par l'intermédiaire par exemple du clavier 4e de l'unité de traitement 4, d'une part l'interruption du vidage du capteur 2 et d'autre part le déclenchement d'une séquence d'acquisition, ce qui se traduit par la commande du séquenceur 3g via le signal 4b. Les images optiques du phénomène prises successivement dans le temps viennent impressionner successivement les différents secteurs Sₙ de la zone photo-sensible 2a selon un ordre déterminé correspondant à l'ordre d'allumage des sources lumineuses Sₙ. Lorsque l'opérateur constate visuellement que la séquence d'allumage des sources lumineuses est terminée, il appuie sur une touche spécifique du clavier 4e de l'unité de traitement 4, laquelle unité de traitement commande alors le transfert et la numérisation de l'intégralité des charges électriques accumulées dans la zone photo-sensible 2a, via le signal de commande 4a, et récupère au fur et à mesure les données numériques qui sont délivrées sur le bus de données 2e.

Dans un exemple précis de réalisation donné à titre indicatif, le capteur 2 utilisé était un capteur CCD matriciel de type pleine image ("*full frame*"), ayant une résolution de 512 pixels par 512 pixels, et plus particulièrement un capteur commercialisé par la société THOMSON sous la référence TH7895A(II). La zone photosensible 2a du capteur était divisée en quatre secteurs S₁ à S₄, ayant chacun une résolution de 256 pixels par 256 pixels. Le séquenceur 3g pouvait être programmé en sorte de régler chaque intervalle de temps (δtᵢ) entre deux flashes lumineux successifs d'une valeur comprise entre 100ns et 2s. Les sources lumineuses de la matrice 3a étaient des diodes électroluminescentes de forte puissance, et plus particulièrement des diodes commercialisées par la société HEWLETT PACKARD sous la référence HLMP-8103 3, utilisées en régime impulsionnel à très forte puissance, et présentant un spectre d'émission de 650 nm et une largeur de spectre de 44nm, en sorte de tirer la meilleure efficacité du capteur CCD précité.

Le dispositif de l'invention dont un exemple particulier de réalisation et de mise en oeuvre viennent d'être décrits permet avantageusement d'acquérir un nombre d'images certes limité mais avec une cadence très élevée qui dépend des intervalles de temps (δtᵢ) de la séquence d'allumage gérée par le séquenceur 3g, et qui est indépendante des temps de transferts électroniques et de numérisation du capteur 2 et des moyens électroniques de gestion 2' qui lui sont associés. Il faut ici souligner que dans l'invention, le facteur limitatif au regard de la cadence de prise d'images, n'est pas le capteur CCD et les moyens de gestion qui lui sont associés, mais est le moyen de génération des flashs lumineux (séquenceur 3g - matrice 3a de diodes électroluminescentes). Ainsi, la valeur minimale de 100ns pour les intervalles de temps (δtᵢ) donnée précédemment dans l'exemple précis de réalisation est liée uniquement à la technologie du séquenceur de déclenchement des diodes mises en oeuvre dans cet exemple. En théorie, il est possible d'améliorer encore la cadence de prise d'images en mettant en oeuvre un système de génération de flashs lumineux plus perfectionné permettant d'obtenir des intervalles de temps (δtᵢ) entre deux flashs lumineux inférieurs à la valeur particulière de 100ns précitée.

Egalement, il convient de souligner que dans le cadre de l'invention, la modification de la cadence de prise d' images est obtenue en réglant la valeur des intervalles de temps (δtᵢ). En diminuant chaque intervalle de temps (δtᵢ), on augmente la cadence de prise d'images, sans changer la résolution des images acquises, puisque le nombre d'images impressionnant le capteur CCD n'est pas modifié (secteurs S₁ à S₄). Il est ainsi possible d'obtenir une cadence de prise d'images très élevée, et par exemple de l'ordre de 10 millions d'images/s, sans altérer la résolution des images acquises. Enfin, comparativement au système à miroir pyramidal et à multiples capteurs d'images à semi-conducteurs décrits dans la demande de brevet européen EP 0 589 002, l'invention procure les avantages supplémentaires suivants:
- l'éclairement des images est uniforme,
- le système de réception est miniaturisé car il ne comprend plus qu'un simple capteur CCD de haute résolution ; cette compacité permet avantageusement une minimisation de la parallaxe et par conséquent une amélioration de la prise de vue du phénomène,
- sa conception est plus simple et moins onéreuse car elle ne met en oeuvre qu'un unique capteur CCD,
- la résolution et le nombre des images obtenues peuvent être très facilement modifiés en jouant sur le nombre de secteurs de la zone photo-sensible 2a du capteur CCD utilisé ; il suffit simplement d'adapter en conséquence le nombre des sources lumineuses et des micro-lentilles Mₙ; le dispositif de l'invention présente ainsi une très grande souplesse lui permettant d'être adapté à des applications variées,
- les erreurs de parité et les différences de températures entre capteurs qui représentent des facteurs limitatifs des systèmes multi-capteurs sont supprimées,
- les temps d'exposition de chaque image peuvent être réduits en jouant sur le temps d'éclairement des sources lumineuses , la sensibilité du capteur CCD et l'optique.

Dans l'exemple particulier de réalisation qui a été décrit en référence à la figure annexée, le dispositif d'acquisition de l'invention fonctionne en mode transmission. Néanmoins, dans une autre variante, il est envisageable de faire fonctionner le dispositif de l'invention en lumière réfléchie. Il suffit pour cela de remplacer la matrice 3a de sources lumineuses, les fibres optiques 3b et les deux lentilles associées 3d et 3e par une matrice de (N) d'obturateurs électroniques, qui est placée au niveau des micro-lentilles Mₙ, et dont l'ouverture et la fermeture sont commandées de manière appropriée par le séquenceur programmable 3g.

Avec le même dispositif et dans un autre mode de fonctionnement, il est possible de piloter le déclenchement du phénomène à visualiser par l'intermédiaire de l'unité de traitement 4, l'enclenchement par l'opérateur d'une touche du clavier de l'unité de traitement 4 provoquant successivement le déclenchement du phénomène à observer et la commande du séquenceur 3g. On peut également automatiser entièrement la séquence d'acquisition, en prévoyant par exemple au niveau de l'unité de traitement 4 une temporisation programmable, qui est déclenchée simultanément à la commande du séquenceur 3g, l'unité de traitement 4 étant conçue pour commander automatiquement le transfert et la numérisation des charges électriques accumulées dans la zone photo-sensible 2a une fois que la temporisation est écoulée. Dans une autre variante, on a également la possibilité de remplacer l'enclenchement manuel de la séquence d'acquisition par un enclenchement automatique au moyen d'un signal de commande émis par le phénomène à observer. Il n'est en outre pas nécessaire que le séquenceur 3g soit commandé par l'unité de traitement. Le séquenceur peut notamment être commandé en parallèle avec l'unité de traitement par un signal de commande émis par le phénomène à observer. Enfin, dans une autre variante, le déclenchement du phénomène peut être commandé par le séquenceur 3g. L'invention n'est pas limitée à l'utilisation d'un capteur à transfert de charges type CCD, mais s'étend à tout capteur matriciel à semi-conducteurs, comportant une zone photosensible permettant de convertir et d'accumuler l'énergie lumineuse sous forme de charges électriques.

L'invention trouve son application à la visualisation de tout phénomène ultra-rapide, transitoire ou périodique, tel que par exemple la visualisation d'écoulements en mécanique des fluides, de la propagation d'ondes acoustiques et de leur interaction par exemple sur une cible élastique, l'étude de phénomènes balistiques, etc ...

## Revendications

1. Procédé d'acquisition ultra-rapide d'une séquence de N images avec une cadence supérieure ou égale à 10.000 images/s, **caractérisé en ce qu'**on utilise un capteur d'images (2) qui comporte une zone matricielle photosensible à semi-conducteurs (2a) ayant pour fonction de convertir et d'accumuler l'énergie lumineuse sous forme de charges électriques, et des moyens électroniques de gestion (2') conçus pour transférer et éventuellement numériser les charges électriques accumulées par la zone photosensible et **en ce que** :
- on génère une séquence de N images optiques, qui sont espacées temporellement par des intervalles de temps (δtᵢ) supérieurs ou égaux à 0,1 ms, et qui sont réparties spatialement de telle sorte que chaque image optique vienne impressionner la zone photosensible (2a) du capteur dans un secteur qui lui est affecté,
- on transfère tout ou partie des charges électriques accumulées par la zone photosensible (2a), au moins lorsque la séquence d'images optiques a été générée.

2. Procédé selon la revendication 1 **caractérisé en ce qu'**on transfère les charges électriques accumulées par la zone photosensible (2a) du capteur une fois seulement que la séquence d'images optiques a été générée.

3. Dispositif d'acquisition ultra-rapide d'une séquence de N images avec une cadence supérieure ou égale à 10.000 images/seconde, **caractérisé en ce qu'**il comprend :
- un capteur d'images (2) qui comporte une zone matricielle photosensible à semi-conducteurs (2a) ayant pour fonction de convertir et d'accumuler l'énergie lumineuse sous forme de charges électriques, et des moyens électroniques de gestion (2') conçus pour transférer les charges électriques accumulées par la zone photosensible,
- des moyens (3) optiques et électroniques conçus pour générer sur commande une séquence de N images optiques, qui sont espacées temporellement par des intervalles de temps (δtᵢ) inférieurs ou égaux à 0,1ms, et qui sont réparties spatialement de telle sorte que chaque image optique vienne impressionner la zone photosensible (2a) du capteur (2) dans un secteur qui lui est affecté,
- et une unité de traitement (4) qui est connectée aux moyens électroniques de gestion (2') associés au capteur (2) et qui est conçue pour commander le transfert de tout ou partie des charges électriques accumulées par la zone photosensible (2a).

4. Dispositif selon la revendication 3 **caractérisé en ce que** le capteur (2) est un capteur matriciel à transfert de charges (CCD), de préférence de type pleine image.

5. Dispositif selon l'une des revendications 3 ou 4 **caractérisé en ce que** les moyens électroniques de gestion (2') comprennent un convertisseur analogique/numérique (2c) pour la numérisation des charges électriques transférées , et **en ce que** l'unité de traitement (4) est apte à récupérer l'image numérisée délivrée par le convertisseur (2c).

6. Dispositif selon la revendication 5 **caractérisé en ce que** l'unité de traitement (4) est conçue pour afficher sur un écran (4d) l'image numérisée délivrée par le convertisseur (2c).

7. Dispositif selon la revendication 3 **caractérisé en ce que** les intervalles de temps (δtᵢ) et/ou les temps d'exposition (Δtᵢ) de chaque image sont réglables, de préférence de manière indépendante.

8. Dispositif selon l'une des revendications 3 ou 7 **caractérisé en ce que** les moyens (3) permettant de générer la séquence de N images optiques comportent :
- une matrice d'émission (3c) de N sources lumineuses (Lₙ),
- une première lentille (3d) permettant de convertir les faisceaux lumineux issus de chaque source lumineuse (Lₙ) en faisceaux parallèles,
- une deuxième lentille (3e) refocalisant les faisceaux lumineux parallèles sur une matrice de réception (3f) constituée de N micro lentilles (Mₙ), qui sont associées respectivement aux N secteurs (Sₙ) de la zone photosensible (2a) du capteur (2) de telle sorte que l'image formée par une micro-lentille (Mₙ) donnée vient exclusivement impressionner le secteur (Sₙ) correspondant de la zone photosensible (2a),
- un séquenceur (3g) apte à commander l'allumage séquentiel des sources lumineuses (Lₙ) de la matrice d'émission (3c).

9. Application du procédé des revendications 1 ou 2 à la visualisation de phénomènes ultra-rapides, transitoires ou périodiques.

## Claims

1. Method for the ultra-fast acquisition of a sequence of N images at a rate greater than or equal to 10 000 images/s, **characterised in that** an image sensor (2) is used which comprises a photosensitive matrix region with semiconductors (2a), the function of which is to convert and accumulate the light energy in the form of electrical charges, and electronic management means (2') designed to transfer and possibly digitise the electrical charges accumulated by the photosensitive region, and **in that**:
- a sequence of N optical images is generated which are spaced in time by time intervals (δtᵢ) greater than or equal to 0.1 ms, and which are distributed spatially in such a way that each optical image is imprinted on the photosensitive region (2a) of the sensor in a sector which is allocated to it,
- all or part of the electrical charges accumulated by the photosensitive region (2a) are/is transferred, at least when the sequence of optical images has been generated.

2. Method according to claim 1, **characterised in that** the electrical charges accumulated by the photosensitive region (2a) of the sensor are transferred only once the sequence of optical images has been generated.

3. Device for the ultra-fast acquisition of a sequence of N images at a rate greater than or equal to 10 000 images/second, **characterised in that** it comprises:
- an image sensor (2) which comprises a photosensitive matrix region with semiconductors (2a), the function of which is to convert and accumulate the light energy in the form of electrical charges, and electronic management means (2') designed to transfer the electrical charges accumulated by the photosensitive region,
- optical and electronic means (3) designed to generate on command a sequence of N optical images which are spaced in time by time intervals (δtᵢ) greater than or equal to 0.1 ms, and which are distributed spatially in such a way that each optical image is imprinted on the photosensitive region (2a) of the sensor in a sector which is allocated to it,
- and a processing unit (4) which is connected to the electronic management means (2') associated with the sensor (2) and which is designed to control the transfer of all or part of the electrical charges accumulated by the photosensitive region (2a).

4. Device according to claim 3, **characterised in that** the sensor is a matrix sensor with charge transfer (CCD), preferably of the full image type.

5. Device according to one of claims 3 or 4, **characterised in that** the electronic management means (2') comprise an analog-to-digital converter (2c) for the digitisation of the transferred electrical charges, and **in that** the processing unit (4) is capable of retrieving the digitised image delivered by the converter (2c).

6. Device according to claim 5, **characterised in that** the processing unit (4) is designed to display on a screen (4d) the digitised image delivered by the converter (2c).

7. Device according to claim 3, **characterised in that** the time intervals (δtᵢ) and/or the exposure times (Δtᵢ) of each image are adjustable, preferably in an independent manner.

8. Device according to one of claims 3 or 7, **characterised in that** the means (3) making it possible to generate the sequence of N optical images comprise:
- a matrix (3c) for emitting light sources (Lₙ),
- a first lens (3d) making it possible to convert the light beams coming from each light source (Lₙ) into parallel beams,
- a second lens (3e) refocusing the parallel light beams on a receiving matrix (3f) made up of N microlenses (Mₙ), which are respectively associated with the N sectors (Sₙ) of the photosensitive region (2a) of the sensor (2) in such a way that the image formed by a given microlens (Mₙ) is printed exclusively on the corresponding sector (Sₙ) of the photosensitive region (2a),
- a sequencer (3g) capable of controlling the sequential switching on of the light sources (Lₙ) of the emitter matrix (3c).

9. Application of the method of claims 1 or 2 to displaying ultra-fast, transitory or periodic phenomena.

## Patentansprüche

1. Verfahren zur ultraschnellen Erfassung einer Sequenz von N Bildern mit einer Bildfolge von ≥ 10 000 Bildern/s, **dadurch gekennzeichnet,**
**dass** man einen Bildsensor (2) verwendet, der eine lichtempfindliche Halbleiter-Matrizenzone (2a), welche die Funktion hat, die Lichtenergie in elektrische Ladungen umzuwandeln und sie in dieser Form zu speichern, und elektronische Steuerungs-Einrichtungen (2') aufweist, die dazu bestimmt sind, die in der lichtempfindlichen Zone gespeicherten elektrischen Ladungen zu übertragen und gegebenenfalls zu digitalisieren, und dass man
- eine Sequenz von N optischen Bildern erzeugt, die zeitlich voneinander getrennt sind durch Zeitintervalle (δtᵢ) von ≤ 0,1 ms und die räumlich so verteilt sind, dass jedes optische Bild die lichtempfindliche Zone (2a) des Sensors in einem Abschnitt belichtet, der ihm zugeordnet ist, und
- alle in der lichtempfindlichen Zone (2a) gespeicherten elektrischen Ladungen oder einen Teil derselben überträgt, mindestens wenn die Sequenz von optischen Bildern erzeugt worden ist.

2. Verfahren nach Anspruch 1, **dadurch gekennzeichnet, dass** man die in der lichtempfindlichen Zone (2a) des Sensors gespeicherten elektrischen Ladungen nur dann überträgt, wenn die Sequenz von optischen Bildern erzeugt worden ist.

3. Vorrichtung zur ultraschnellen Erfassung einer Sequenz von N Bildern mit einer Bildfolge von ≥ 10 000 Bildern/s, **dadurch gekennzeichnet, dass** sie umfasst:
- einen Bildsensor (2) der eine lichtempfindliche Halbleiter-Matrizenzone (2a), welche die Funktion hat, die Lichtenergie in elektrische Ladungen umzuwandeln und sie in dieser Form zu speichern, und elektronische Steuerungseinrichtungen (2') aufweist, die dazu bestimmt sind, die in der lichtempfindlichen Zone gespeicherten elektrischen Ladungen zu übertragen,
- optische und elektronische Einrichtungen (3), die dazu bestimmt sind, auf Befehl eine Sequenz von N optischen Bildern zu erzeugen, die zeitlich getrennt voneinander angeordnet sind durch Intervalle (δtᵢ) von ≤ 0,1 ms und die räumlich so verteilt sind, dass jedes optische Bild die lichtempfindliche Zone (2a) des Sensors (2) in einem Abschnitt belichtet, der ihm zugeordnet ist, und
- eine Verarbeitungseinheit (4), die mit elektronischen Steuerungs-Einrichtungen (2') verbunden ist, die dem Sensor (2) zugeordnet sind, und die dazu bestimmt ist, die vollständige oder teilweise Übertragung der in der lichtempfindlichen Zone (2a) gespeicherten elektrischen Ladungen zu bewirken.

4. Vorrichtung nach Anspruch 3, **dadurch gekennzeichnet, dass** der Sensor (2) ein Ladungsübertragungs-Matrizensensor (CCD), vorzugsweise vom Vollbild-Typ, ist.

5. Vorrichtung nach einem der Ansprüche 3 oder 4, **dadurch gekennzeichnet, dass** die elektronischen Steuerungseinrichtungen (2') einen Analog/Digital-Umsetzer umfassen, um die übertragenen elektrischen Ladungen zu digitalisieren, und dass die Verarbeitungseinheit (4) geeignet ist, das durch den Umsetzer (2c) ausgegebene digitalisierte Bild zurückzugewinnen.

6. Vorrichtung nach Anspruch 5, **dadurch gekennzeichnet, dass** die Verarbeitungseinheit (4) dazu bestimmt ist, das von dem Umsetzer (2c) ausgegebene digitalisierte Bild auf einem Bildschirm (4d) anzuzeigen.

7. Vorrichtung nach Anspruch 3, **dadurch gekennzeichnet, dass** die Zeitintervalle (δtᵢ) und/oder die Belichtungszeiten (Δtᵢ) jedes Bildes steuerbar sind, vorzugsweise unabhängig steuerbar sind.

8. Vorrichtung nach einem der Ansprüche 3 oder 7, **dadurch gekennzeichnet, dass** die Einrichtungen (3), welche die Erzeugung der Sequenz von N optischen Bildern erlauben, umfassen:
- eine Emissionsmatrix (3c) für N Lichtquellen (Lₙ),
- eine erste Linse (3d), welche die Umwandlung der von jeder Lichtquelle (Lₙ) abgegebenen Lichtbündel in parallele Bündel erlaubt,
- eine zweite Linse (3e), welche die parallelen Lichtbündel auf einer Empfangsmatrix (3f) wieder fokussiert, die aus N Mikrolinsen (Mₙ) besteht, die jeweils den Abschnitten (Sₙ) der lichtempfindlichen Zone (2a) des Sensors (2) so zugeordnet sind, dass das durch eine gegebene Mikrolinse (Mₙ) erzeugte Bild ausschließlich den entsprechenden Abschnitt (Sₙ) der lichtempfindlichen Zone (2a) belichtet, und
- einen Sequenzschalter (3g), der geeignet ist, das aufeinanderfolgende Einschalten der Lichtquellen (Lₙ) der Emissionsmatrix (3c) zu bewirken.

9. Anwendung des Verfahrens der Ansprüche 1 oder 2 zur Sichtbarmachung von ultraschnellen, vorübergehenden oder regelmäßig wiederkehrenden Phänomenen.
